# FASCICULE DE BREVET EUROPEEN

(11) **EP 0 728 934 B1**
(45) Date de publication et mention de la délivrance du brevet: **06.05.1999**
(21) Numéro de dépôt: 96400309.9
(22) Date de dépôt: 15.02.1996
(51) Int. Cl.: F02K 1/70

(54) **Inverseur de pousée à volets aval pour turboréacteur**
Schubumkehrvorrichtung für ein Bläsertriebwerk
Thrust reverser for a turbofan engine

(30) Priorité: 21.02.1995 FR 9501959
(43) Date de publication de la demande: 28.08.1996
(73) Titulaire: Hispano-Suiza Aérostructures, 76700 Gonfreville l'Orcher (FR)
(72) Inventeur: Valleroy, Laurent G., 76600 Le Havre (FR)
(74) Mandataire: Berrou, Paul

(56) Documents cités:
- EP-A- 0 043 764
- EP-A- 0 067 747
- EP-A- 0 191 204
- FR-A- 2 622 928
- US-A- 3 280 562
- US-A- 5 090 197
- US-A- 5 120 004
- US-A- 5 197 693

## Description

La présente invention concerne un inverseur de poussée à volets aval pour turboréacteur.

FR-A-2 622 928 illustre un exemple d'inverseur de poussée disposé en position aval et réalisant l'inversion de poussée du flux secondaire ou flux froid d'un turboréacteur à double flux. Sur ce type d'inverseur, des obstacles aval ou coquilles, en plus d'assurer l'inversion soit du flux secondaire soit de l'ensemble des flux, forment également la tuyère d'éjection lors du fonctionnement en poussée directe. Le bord aval desdits obstacles constitue par conséquent dans ce cas l'extrémité aval de la paroi externe du canal, notamment du canal annulaire de circulation de la veine de flux secondaire dans l'application à un turboréacteur à double flux. Dans les réalisations connues de ce type, les obstacles sont montés pivotants sur la structure fixe de l'inverseur.

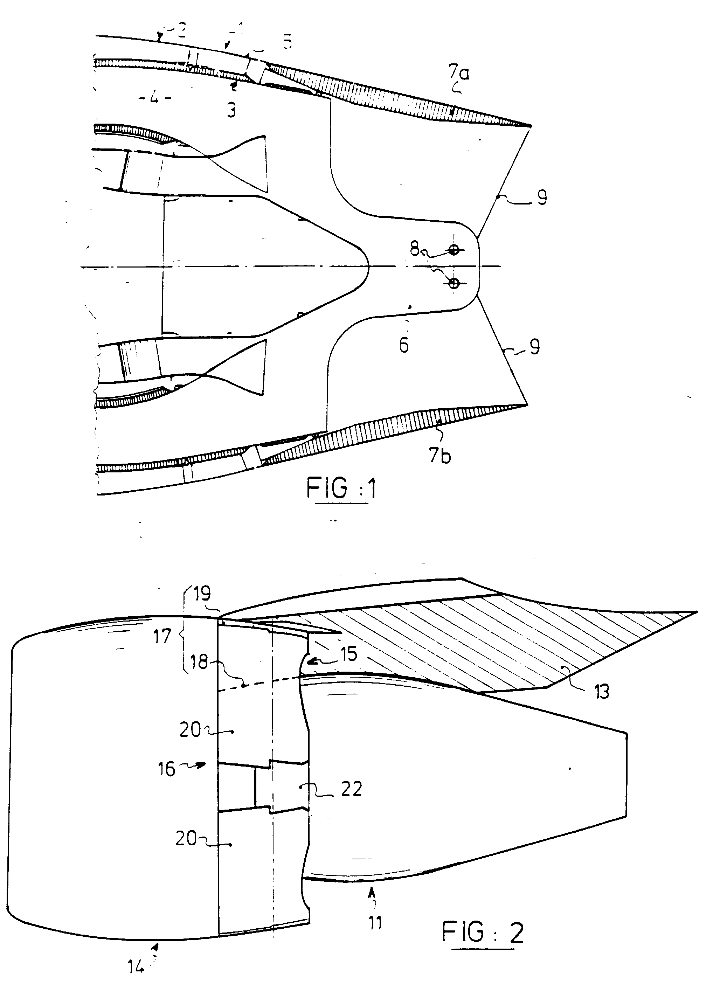

La figure 1 des dessins annexés montre un exemple de réalisation de ce type connu d'inverseur de poussée. L'inverseur de poussée est constitué dans ce cas d'une structure fixe amont 1 fixée sur le turboréacteur 2 ou sa nacelle et comportant une paroi interne 3 délimitant extérieurement le canal annulaire de circulation de la veine fluide, un carénage externe 5 fixé sur la paroi interne 3 et deux structures latérales 6. Deux obstacles aval 7a et 7b sont montés pivotants sur la structure fixe, notamment au moyen de pivots 8 portés par les structures latérales 6 qui supportent également un système de commande des déplacements et de verrouillage des obstacles 7a et 7b. L'extrémité aval 9 des obstacles 7a et 7b constitue le bord de fuite de la paroi externe, en prolongement vers l'aval du carénage 5. Toutefois les solutions connues de ce type se révèlent mal adaptées à certaines applications aux turboréacteurs à double flux présentant un taux de dilution élevé et comportant une tuyère d'éjection de soufflante de longueur réduite ou aux applications dites à nacelle courte. L'inversion de poussée se limite dans ces applications visées par l'invention au flux secondaire dit flux froid et l'inverseur de poussée doit être monté au niveau de la tuyère d'éjection de soufflante.

Un inverseur de poussée de turboréacteur du type précité permettant de répondre à ces conditions sans encourir les inconvénients des solutions précédemment connues est caractérisé en ce que chaque volet est relié à l'arrière par au moins une bielle sur la structure fixe interne du canal secondaire et que lesdits pivots de volet sont supportés par des chariots coulissants susceptibles de coulisser vers l'arrière suivant une direction parallèle à l'axe géométrique longitudinal du turboréacteur lors du passage des volets en position déployée d'inversion de poussée, de manière que, lors du fonctionnement en jet direct, le raccordement entre le bord amont du volet et la structure fixe radialement extérieure présente un profil aérodynamique sans rupture et sans présence de cavité.

D'autres caractéristiques et avantages de l'invention seront mieux compris à la lecture de la description qui va suivre d'un mode de réalisation de l'invention, en référence aux dessins annexés sur lesquels :
- la figure 1 précédemment décrite représente selon une vue schématique en coupe longitudinale par un plan passant par l'axe de rotation la partie arrière d'un turboréacteur équipé d'un inverseur de poussée à volets aval antérieurement connu;
- la figure 2 montre suivant une vue schématique partielle latérale un exemple d'application d'un inverseur de poussée conforme à l'invention, lors d'un fonctionnement en jet direct;
- la figure 3 représente l'inverseur de poussée de la figure 2 suivant une vue en coupe par un plan transversal passant par l'axe des pivots de volets ;
- la figure 4 représente- suivant une vue schématique partielle en coupe longitudinale par un plan passant par l'axe de rotation du turboréacteur l'inverseur de poussée représenté sur la figure 2, montrant le passage de la position de jet direct à la position d'inversion de poussée ;
- la figure 5 représente selon une vue schématique analogue à celle de la figure 2 l'inverseur de poussée conforme à l'invention, lors d'un fonctionnement en inversion de poussée;
- la figure 6 montre selon une vue schématique à partir de l'arrière du turboréacteur l'inverseur de poussée représenté à la figure 5, en position d'inversion de poussée.

La figure 2 montre une application particulièrement intéressante et avantageuse de l'invention au cas d'un turboréacteur 11 à double flux présentant un grand taux de dilution. Dans l'exemple représenté, le turboréacteur 11 est monté, de manière connue en soi, sous l'aile d'un avion, en position avancée, au moyen d'un pylône ou mât d'avion 13. Ce type de montage est associé à la mise en oeuvre d'une nacelle intégrée 14, enveloppant extérieurement un canal secondaire 15 de circulation du flux secondaire ou flux froid du turboréacteur à double flux, ledit canal intégrant le canal de soufflante du turboréacteur et ladite paroi extérieure ou nacelle 14 intégrant la tuyère d'éjection de soufflante. Dans ce cas, la nacelle 14 est très courte et correspond à un fonctionnement dit à flux séparés.

De manière remarquable et conforme à l'invention, un dispositif d'inversion de poussée ou inverseur 16 est intégré dans ladite nacelle 14. L'inverseur de poussée se compose d'une structure fixe 17 et d'une partie comprenant des éléments mobiles. La structure fixe 17 comporte une partie radialement interne 18 et une partie 19 constituée par la paroi fixe radialement extérieure du canal secondaire de soufflante. La partie mobile de l'inverseur de poussée comporte une pluralité de volets 20 qui sont au nombre de quatre dans l'exemple de réalisation représenté sur les dessins mais leur nombre peut varier en fonction des applications particulières et notamment en fonction de la définition du turboréacteur et de son montage sur l'avion et des besoins particuliers correspondants.

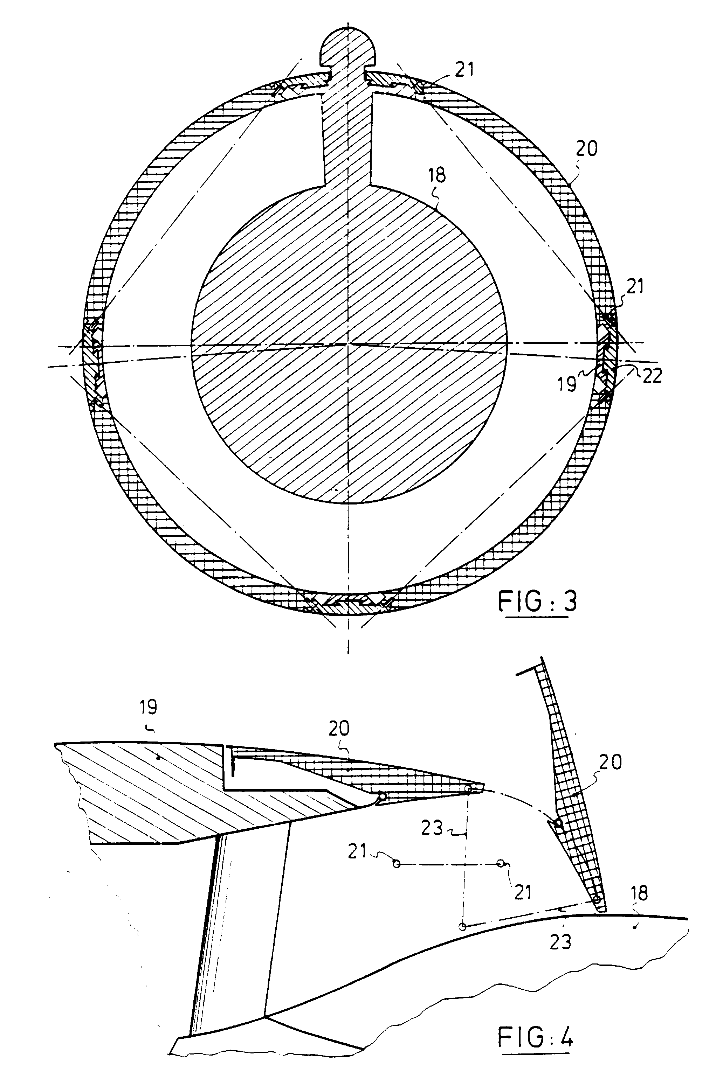

Ledit inverseur de poussée est représenté plus en détails sur les figures 3 à 5. Chaque volet 20 est monté pivotant sur deux pivots latéraux 21 disposés un de chaque côté du volet. De manière remarquable et conforme à l'invention, lesdits pivots 21 sont supportés par des chariots 22 susceptibles de coulisser suivant une direction longitudinale parallèle à l'axe géométrique de symétrie de l'inverseur ou axe de rotation du turboréacteur. Lesdits chariots coulissants 22 sont reliés à la structure fixe radialement extérieure 19 de l'inverseur. Chaque chariot coulissant 22 est associé à des moyens de guidage 24 solidaires de ladite structure fixe extérieure 19. En outre chaque volet 20 est maintenu par au moins une bielle 23 reliant la partie arrière du volet à la structure fixe interne 18.

Le système de commande des déplacements des éléments mobiles de l'inverseur, volets, bielles et chariots coulissants est constitué de moyens connus en soi tels que vérins et n'a pas été représenté en détails sur les dessins. En fonction des applications particulières, le point d'application du vérin peut être déterminé sur le volet, le chariot ou la bielle.

Dans la position correspondant au fonctionnement en jet direct de l'inverseur de poussée et telle que représentée sur les figures 2 et 3, les volets 20 sont intégrés à la nacelle comme partie de la tuyère d'éjection de soufflante et chaque volet 20 est maintenu par ses pivots 21 et par la bielle arrière 23.

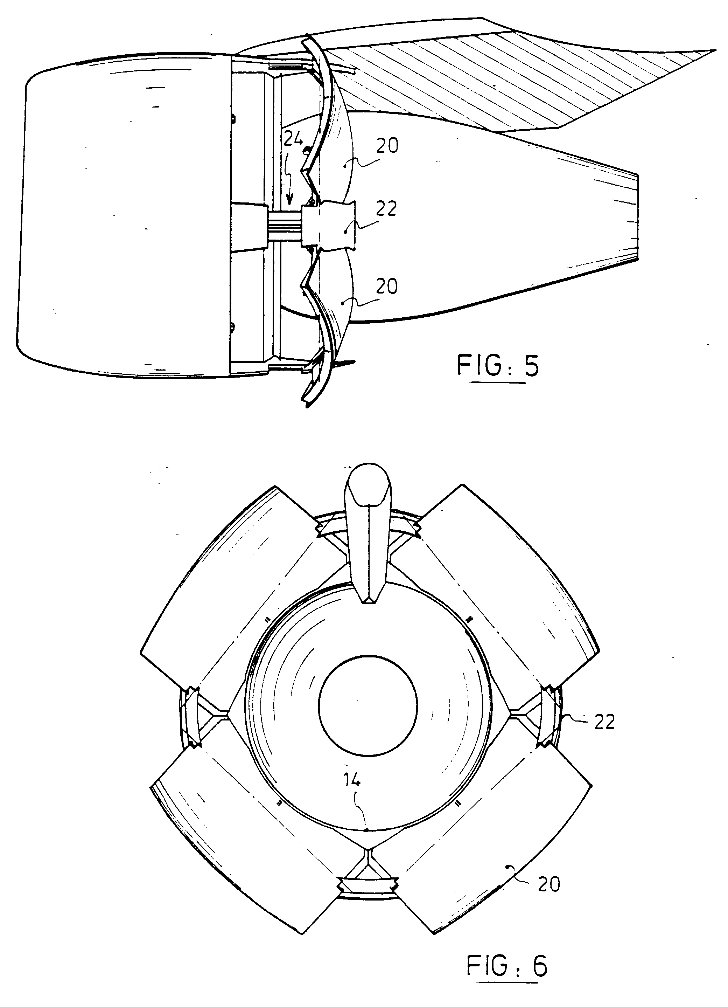

Lors du passage à la position représentée sur les figures 5 et 6, correspondant au fonctionnement en inversion de poussée de l'inverseur durant lequel le flux circulant dans le canal secondaire 15 est dévié vers l'avant par les volets 20, sous l'action du système de commande, chaque volet 20 pivote autour de ses pivots 21, la bielle 23 tourne autour de son articulation de liaison à la structure fixe interne 18 et les chariots coulissants 22 se déplacent vers l'arrière. Lorsque la position stable d'inversion est atteinte, chaque volet 20 est à nouveau maintenu en position par ses pivots 21 et la bielle arrière associée 23. La figure 4 montre l'évolution de la position des éléments mobiles de l'inverseur de poussée, volets 20, pivots 21 et bielles 23 lors du passage de la position de jet direct à la position d'inversion de poussée. En plus des avantages précédemment notés, on relève également les avantages suivants procurés par l'invention :
- lors du fonctionnement en jet direct de l'inverseur de poussée, le système de commande est peu sollicité car les efforts de pression s'exerçant sur les volets 20 sont principalement absorbés au niveau des pivots 21 ou repris par la bielle 23 ;
- la paroi extérieure du canal secondaire présente lors du fonctionnement en jet direct un profil aérodynamique sans rupture, évitant notamment la présence d'une cavité au niveau du raccordement entre le bord amont interne du volet 20 et la structure fixe radialement extérieure 19 comportant par exemple un bord de déviation arrondi, ce qui améliore les rendements obtenus, mais cet avantage est obtenu que le bord de déviation soit plat ou de forme quelconque ;
- possibilité d'installer l'inverseur de poussée dans un encombrement réduit et notamment dans le cas d'une nacelle courte ;
- la position des pivots 21 des volets 20 et la position des points d'attache des bielles 23 sur les volets 20 peuvent être déterminées de telle façon qu'en fonctionnement de jet direct, il résulte des efforts de pression exercés par le flux sur les volets 20 une composante d'effort axiale dirigée vers l'avant qui tend à maintenir le volet 20 dans une position stable de jet direct.

## Revendications

1. Inverseur de poussée d'un turboréacteur à double flux comportant des éléments déplaçables ou volets (20) susceptibles, lors du fonctionnement du turboréacteur en poussée directe, de s'intégrer à la paroi extérieure (14) du canal annulaire de flux secondaire en formant l'extrémité aval de la tuyère d'éjection de soufflante du turboréacteur et, en position déployée, de constituer des obstacles de déviation du flux secondaire en procurant une inversion de poussée, lesdits volets (20) étant montés pivotants sur des pivots (21) et associés à des moyens de déplacement caractérisé en ce que chaque volet (20) est relié à l'arrière par au moins une bielle (23) sur la structure fixe interne (18) du canal secondaire et que lesdits pivots (21) de volet sont supportés par des chariots coulissants (22) susceptibles de coulisser vers l'arrière suivant une direction parallèle à l'axe géométrique longitudinal du turboréacteur lors du passage des volets (20) en position déployée d'inversion de poussée, de manière que, lors du- fonctionnement en jet direct, le raccordement entre le bord amont interne du volet (20) et la structure fixe radialement extérieure (19) présente un profil aérodynamique sans rupture et sans présence de cavité.

2. Inverseur de poussée de turboréacteur à double flux selon la revendication 1 dans lequel les volets (20) sont au nombre de quatre et chaque volet (20) est associé à deux pivots (21), chacun situé sur un bord latéral du volet et chaque chariot coulissant (22) supporte deux pivots (21), respectivement associés à deux volets (20) voisins.

## Claims

1. Thrust reverser for a bypass jet engine, comprising displaceable elements or flaps (20) which, when the jet engine is operating in direct thrust mode, can be incorporated into the outer wall (14) of the bypass stream annular duct forming the downstream end of the turbofan jet pipe and, in the deployed position, constitute obstacles which deflect the bypass stream, causing thrust reversal, the said flaps (20) being mounted so that they can pivot on pivots (21) and associated with movement means, characterized in that each flap (20) is connected at the rear by at least one link (23) to the fixed internal structure (18) of the bypass duct, and that the said flap pivots (21) are supported in sliding carriages (22) capable of sliding backwards in a direction parallel to the longitudinal geometric axis of the jet engine as the flaps (20) move into the deployed thrust-reversal position so that when operating in direct jet mode, the internal upstream edge of the flap (20) meets the radially external stationary structure (19) in a seamless aerodynamic profile with no cavities.

2. Bypass jet engine thrust reverser according to Claim 1, in which there are four flaps (20) and each flap (20) is associated with two pivots (21) each located on a lateral edge of the flap and each sliding carriage (22) supports two pivots (21) respectively associated with two adjacent flaps (20).

## Patentansprüche

1. Schubumkehrvorrichtung eines Zweikreis-TL-Triebwerks mit bewegbaren Elementen oder Klappen (20), die bei Direktschubbetrieb des TL-Triebwerks in die Außenwand (14) des Nebenstrom-Ringkanals integriert werden können, wobei sie das hintere Ende der Gebläseschubdüse des TL-Triebwerks bilden, und in ausgeklappter Stellung Umlenkklappen für den Nebenstrom bilden können, indem sie eine Schubumkehr leisten, wobei diese Klappen (20) um Drehzapfen (21) schwenkbar angebracht sind und mit Mitteln zum Verschieben verbunden sind,
**dadurch gekennzeichnet, daß** jede Klappe (20) hinten durch mindestens eine Stange (23) mit dem inneren festen Aufbau (18) des Nebenkanals verbunden ist und daß die genannten Klappendrehzapfen (21) auf Gleitschlitten (22) sitzen, die beim Wechsel der Klappen (20) in die ausgeklappte Schubumkehrstellung parallel zur Längsgeometrieachse des TL-Triebwerks nach hinten gleiten können, so daß im Direktstrahlbetrieb der Anschluß zwischen der inneren Vorderkante der Klappe (20) und dem radial äußeren festen Aufbau (19) ein aerodynamisches Profil ohne Unterbrechung und ohne Vertiefung hat.

2. Schubumkehrvorrichtung eines Zweikreis-TL-Triebwerks nach Anspruch 1, bei der die Klappen (20) vier an der Zahl sind und jede Klappe (20) mit zwei Drehzapfen (21) verbunden ist, die sich jeweils an einer Seitenkante der Klappe befinden, und an jedem Gleitschlitten (22) zwei Drehzapfen (21) sitzen, die mit zwei jeweiligen benachbarten Klappen (20) verbunden sind.
